(19) Europäisches Patentamt European Patent Office Office européen des brevets

(11) **EP 3 454 142 B1**

(12) **FASCICULE DE BREVET EUROPEEN**

(45) Date de publication et mention de la délivrance du brevet:
**22.01.2020 Bulletin 2020/04**

(51) Int Cl.:
*H02J 3/14* *(2006.01)*      *G06Q 50/06* *(2012.01)*
*G06Q 10/06* *(2012.01)*      *H02J 3/38* *(2006.01)*
*H02J 3/00* *(2006.01)*

(21) Numéro de dépôt: **18185556.0**

(22) Date de dépôt: **25.07.2018**

(54) **PROCÉDÉ DE SURVEILLANCE ET DE CONTRÔLE D'UN RÉSEAU ÉLECTRIQUE**

VERFAHREN ZUR ÜBERWACHUNG UND STEUERUNG EINES ELEKTRISCHEN STROMNETZES

METHOD FOR MONITORING AND CONTROLLING AN ELECTRICAL POWER NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.09.2017 FR 1758419**

(43) Date de publication de la demande:
**13.03.2019 Bulletin 2019/11**

(73) Titulaire: **Schneider Electric Industries SAS**
**92500 Rueil-Malmaison (FR)**

(72) Inventeurs:
• **VINOT, Benoît**
**38050 Grenoble Cedex 09 (FR)**
• **GAST, Nicolas**
**38050 Grenoble Cedex 09 (FR)**
• **CADOUX, Florent**
**38050 Grenoble Cedex 09 (FR)**
• **HELIOT, Rodolphe**
**38050 Grenoble Cedex 09 (FR)**

(74) Mandataire: **Tripodi, Paul**
**Schneider Electric Industries SAS**
**Service Propriété Industrielle**
**World Trade Center / 38EE1**
**5 Place Robert Schuman**
**38050 Grenoble Cedex 09 (FR)**

(56) Documents cités:
**WO-A1-2016/135771**      **WO-A2-2013/093794**
**FR-A1- 3 028 080**      **US-A1- 2012 109 400**
**US-A1- 2013 204 451**

**Description**

**Domaine technique de l'invention**

La présente invention se rapporte à un procédé de surveillance et de contrôle d'un réseau électrique qui comporte au moins un poste de transformation entre un sous-réseau moyenne tension et un sous-réseau basse tension.
L'invention concerne également le système de surveillance et de contrôle permettant de mettre en œuvre ledit procédé.

**Etat de la technique**

Il existe aujourd'hui beaucoup de solutions qui permettent de surveiller et contrôler un réseau électrique, notamment pour lui assurer une certaine flexibilité. Aujourd'hui, il s'agit en effet de tenir compte à la fois de la consommation électrique de chaque entité du réseau électrique, mais aussi de la production électrique possible de différentes entités du réseau (via des panneaux solaires par exemple) et des contraintes physiques du réseau (de type surtension, sous-tension, surintensité...). Selon ces contraintes, il sera en effet parfois nécessaire d'agir sur la production et/ou la consommation d'une ou plusieurs entités du réseau.
Traditionnellement, pour réaliser un tel contrôle d'un réseau électrique, un centre de contrôle se base par exemple sur le plan du réseau électrique et utilise des méthodes de type "load flow" ou de type "optimal power flow" qui permettent de déterminer le flux de puissance dans les différentes branches du réseau électrique pour éventuellement agir sur les entités du réseau.
Cependant, le plan du réseau n'est pas toujours disponible ou peut être erroné, entraînant donc forcément des erreurs de contrôle. De plus, les solutions antérieures ne sont pas toujours adaptées à toutes les situations de fonctionnement rencontrées. Elles peuvent ainsi agir sur le réseau de manière inadaptée, voire contre-productive. Des exemples concrets seront notamment présentés en fin de description.
Le document intitulé "Efficient Computation of Sensitivity Coefficients of Node Voltages and Line Currents in Unbatanced Radial Electrical Distribution Networks" - Konstantina Christakou, Jean-Yves Le Boudec, Mario Paolone, Dan-Cristian Tomozei", décrit un principe de contrôle de réseau optimisé, basé sur la création de matrices d'influence pour chaque point de fonctionnement, à partir d'un plan du réseau.
Cette solution antérieure s'avère cependant peu fiable, lié au fait qu'elle s'appuie sur un plan du réseau pour construire les matrices et difficile à mettre en œuvre car elle nécessite une matrice distincte pour chaque point de fonctionnement.
Le document US 2013/204451 A1 décrit une solution permettant d'équilibrer un réseau électrique entre la puissance électrique générée par des entités de production (par exemple panneau PV) et la puissance électrique consommée par des entités de consommation (appareils électriques) en se basant sur des données de prévision météorologique.
Le but de l'invention est donc de proposer un procédé de surveillance et de contrôle d'un réseau électrique, qui soit fiable, efficace pour mettre en œuvre au niveau des entités d'un réseau électrique des actions adaptées aux contraintes du réseau électrique et qui ne nécessite pas l'usage d'un plan du réseau électrique pour fonctionner, évitant ainsi un fonctionnement inadapté en cas d'erreur sur un plan du réseau.

**Exposé de l'invention**

Ce but est atteint par un procédé de surveillance et de contrôle d'un réseau électrique qui comporte au moins un poste de transformation délimitant un sous-réseau moyenne tension et un sous-réseau basse tension et plusieurs entités du sous-réseau basse tension, chaque entité étant consommatrice et/ou productrice d'électricité dans le sous-réseau basse tension, ledit procédé étant mis en œuvre par un système de surveillance et de contrôle comprenant au moins une unité de traitement, ledit procédé comportant :

- Une étape d'acquisition d'une puissance électrique consommée et/ou produite par chaque entité du sous-réseau basse tension à des pas de temps successifs,
- Une étape de détermination à chaque nouveau pas de temps d'un quota de production et/ou de consommation à attribuer à chaque entité,
- Une étape de détermination d'une valeur minimale et d'une valeur maximale de quota de production et/ou de consommation à respecter pour chaque entité en tenant compte de la puissance électrique consommée et/ou produite à un pas de temps précédant ledit nouveau pas de temps,
- Une étape de détermination d'une puissance électrique consommée et/ou produite prévisionnelle pour chaque entité, basée sur ladite puissance électrique consommée et/ou produite acquise à un pas de temps précédant ledit nouveau pas de temps,

- Ledit quota de production et/ou de consommation étant une solution à un problème d'optimisation tenant compte :

  - D'au moins un modèle de données unique acquis par apprentissage, appliqué à chaque nouveau pas de temps et qui comporte des données représentatives d'une influence de la puissance électrique consommée et/ou produite par chaque entité sur au moins une grandeur électrique surveillée,
  - De contraintes techniques à respecter pour ladite au moins une grandeur surveillée,
  - De ladite valeur minimale et valeur maximale de quota de production et/ou de consommation déterminée,
  - De ladite puissance électrique consommée et/ou produite prévisionnelle déterminée pour chaque entité,
  - D'une fonction d'optimisation choisie pour allouer les quotas de production et/ou consommation aux entités,

- Une étape de détermination de données de contrôle en production et/ou en consommation électrique à appliquer à une ou plusieurs entités du sous-réseau basse tension en tenant compte de chaque quota de production et/ou de consommation déterminé.

Selon un aspect particulier de l'invention, ladite au moins une grandeur électrique surveillée correspond à la norme de tension de chaque entité à son point de connexion.

Selon un autre aspect particulier de l'invention, lesdites contraintes à respecter pour ladite au moins une grandeur électrique surveillée correspondent à une valeur minimale de tension et une valeur maximale de tension pour chaque entité.

Selon un autre aspect de l'invention, ladite au moins une grandeur électrique surveillée correspond à la puissance électrique transitant au niveau du poste de transformation.

Selon un autre aspect de l'invention, lesdites contraintes à respecter pour ladite au moins une grandeur électrique surveillée correspondent à une valeur minimale de puissance transitant au transformateur et une valeur maximale de puissance transitant au niveau du poste de transformation (P).

Selon un autre aspect de l'invention, ladite au moins une grandeur électrique surveillée correspond à la norme de l'intensité transitant par un câble.

Selon un autre aspect de l'invention, ladite fonction d'optimisation est choisie parmi :

- Maximiser la somme des quotas de production et/ou de consommation attribués aux entités,
- Maximiser l'équité des restrictions de consommation entre les entités, ou
- Maximiser le logarithme de la puissance attribuée à chaque entité ($E_i$).

Selon un autre aspect de l'invention, l'étape de détermination d'une valeur minimale et d'une valeur maximale de quota de production et/ou de consommation à respecter pour chaque entité est réalisée en tenant compte de données techniques relatives à chaque entité, choisies parmi une ou plusieurs des données suivantes :

- Un niveau de puissance attribué à chaque entité selon son contrat d'approvisionnement,
- Des données relatives à la solution de production électrique installée dans chaque entité productrice,
- Une quantité maximale d'énergie ou de puissance écrêtable par entité,
- Des données relatives à la capacité de stockage de l'entité si celle-ci est productrice.

Selon un autre aspect de l'invention, le procédé comporte une étape de détermination du nombre de nouvelles données électriques du réseau électrique et une étape de mise à jour dudit au moins un modèle de données du réseau électrique lorsque suffisamment de données électriques acquises sont disponibles.

L'invention concerne également un système de surveillance et de contrôle d'un réseau électrique qui comporte au moins un poste de transformation délimitant un sous-réseau moyenne tension et un sous-réseau basse tension et plusieurs entités du sous-réseau basse tension, chaque entité étant consommatrice et/ou productrice d'électricité dans le sous-réseau basse tension, ledit système comportant :

- Un module d'acquisition d'une puissance électrique consommée et/ou produite par chaque entité du sous-réseau basse tension à des pas de temps successifs,
- Un module de contrôle configuré pour :

  - Déterminer à chaque nouveau pas de temps un quota de production et/ou de consommation à attribuer à chaque entité,
  - Déterminer une valeur minimale et une valeur maximale de quota de production et/ou de consommation à respecter pour chaque entité en tenant compte de la puissance électrique consommée et/ou produite à un pas de temps précédant ledit nouveau pas de temps,

- Déterminer une puissance électrique consommée et/ou produite prévisionnelle pour chaque entité, basée sur ladite puissance électrique consommée et/ou produite acquise à un pas de temps précédant ledit nouveau pas de temps,
- ledit quota (q) de production et/ou de consommation étant une solution à un problème d'optimisation tenant compte :

  - D'au moins un modèle de données unique acquis par apprentissage, appliqué à chaque nouveau pas de temps et qui comporte des données représentatives d'une influence de la puissance électrique consommée et/ou produite par chaque entité sur au moins une grandeur électrique surveillée,
  - De contraintes techniques à respecter pour ladite au moins une grandeur surveillée,
  - De ladite valeur minimale et valeur maximale de quota de production et/ou de consommation déterminée,
  - De ladite puissance électrique consommée et/ou produite prévisionnelle déterminée pour chaque entité,
  - D'une fonction d'optimisation choisie pour allouer les quotas de production et/ou consommation aux entités,

- Déterminer des données de contrôle en production et/ou en consommation électrique à appliquer à une ou plusieurs entités du sous-réseau basse tension en tenant compte de chaque quota de production et/ou de consommation déterminé.

Selon une particularité du système, ladite au moins une grandeur électrique surveillée correspond à la norme de tension de chaque entité à son point de connexion.
Selon une autre particularité du système, lesdites contraintes à respecter pour ladite au moins une grandeur électrique surveillée correspondent à une valeur minimale de tension et une valeur maximale de tension pour chaque entité.
Selon une autre particularité du système, ladite au moins une grandeur électrique surveillée correspond à la puissance électrique transitant au niveau du poste de transformation.
Selon une autre particularité du système, lesdites contraintes à respecter pour ladite au moins une grandeur électrique surveillée correspondent à une valeur minimale de puissance transitant au transformateur et une valeur maximale de puissance transitant au niveau du poste de transformation.
Selon une autre particularité du système, ladite au moins une grandeur électrique surveillée correspond à la norme de l'intensité transitant par un câble.
Selon une autre particularité du système, ladite fonction d'optimisation est choisie parmi :

- Maximiser la somme des quotas de production et/ou de consommation attribués aux entités),

- Maximiser l'équité des restrictions de consommation entre les entités, ou

- Maximiser le logarithme de la puissance attribuée à chaque entité.

Selon une autre particularité du système, le module de contrôle est configuré pour déterminer une valeur minimale et une valeur maximale de quota de production et/ou de consommation à respecter pour chaque entité en tenant compte de données techniques relatives à chaque entité, choisies parmi une ou plusieurs des données suivantes :

- Un niveau de puissance attribué à chaque entité selon son contrat d'approvisionnement,

- Des données relatives à la solution de production électrique installée dans chaque entité productrice,

- Une quantité maximale d'énergie ou de puissance "écrêtable" par entité,

- Des données relatives à la capacité de stockage de l'entité si celle-ci est productrice.

Selon une autre particularité du système, il comporte un module d'apprentissage configuré pour déterminer un nombre de nouvelles données électriques du réseau électrique et une mise à jour dudit au moins un modèle de données du réseau électrique lorsque suffisamment de données électriques acquises sont disponibles.

**Brève description des figures**

D'autres caractéristiques et avantages vont apparaître dans la description détaillée qui suit faite en regard des dessins annexés dans lesquels :

- La figure 1 représente de manière schématique un réseau électrique simplifié auquel le procédé de surveillance et de contrôle de l'invention peut être appliqué et le système de surveillance et de contrôle de l'invention employé pour surveiller un tel réseau électrique.
- La figure 2 représente de manière schématique le système de surveillance et de contrôle de l'invention et son principe de fonctionnement.
- Les figures 3 et 4 représentent différents cas de fonctionnement auxquels le procédé de l'invention s'applique.

**Description détaillée d'au moins un mode de réalisation**

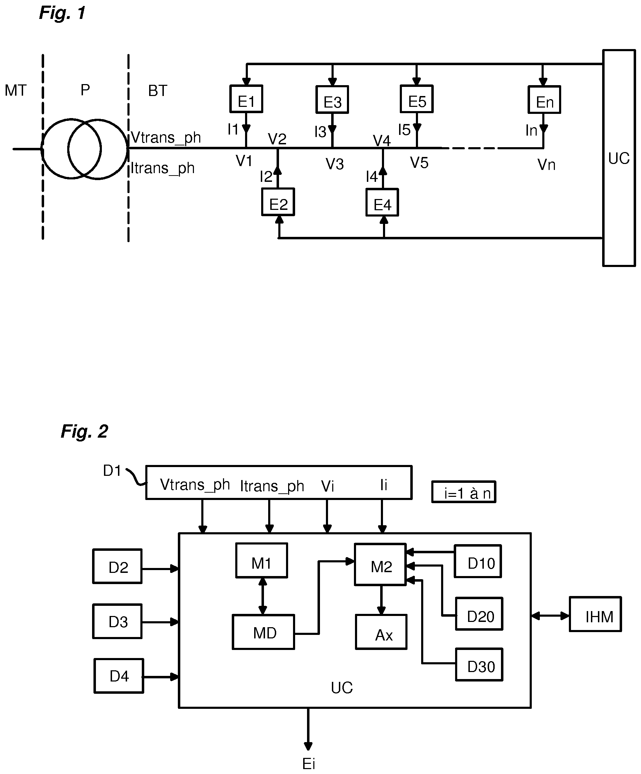

En référence à la figure 1, l'invention s'applique à un réseau électrique qui comporte au moins un poste de transformation P de type MT/BT délimitant ainsi un sous-réseau basse tension BT et un sous-réseau moyenne tension MT.

Le sous-réseau basse tension comporte plusieurs entités Ei (de rang i, avec i allant de 1 à n et n supérieur ou égal à 2) qui seront chacune de type consommateur et/ou de type producteur d'une puissance électrique.

Par entité Ei, de manière non limitative, il faut comprendre, par exemple, une habitation, un groupe d'habitations, au moins une usine, au moins une centrale de production d'électricité par exemple de type photovoltaïque, éolienne ou une combinaison de ces différentes entités, par exemple une habitation dotée de panneaux photovoltaïques pour produire de l'électricité. Chaque entité Ei comportera ou sera associée à une unité de commande chargée de mettre en place des actions appropriées tenant compte des données de contrôle reçues, par exemple des actions d'écrêtage en production et en consommation. Une action d'écrêtage consistera ainsi en une limitation en production ou en consommation d'une entité.

A titre d'exemple, le réseau électrique représenté sur la figure 1 comporte ainsi n entités Ei.

De manière non limitative, le réseau représenté sur la figure comporte n entités Ei connectées au poste de transformation P via une branche de réseau. Il faut comprendre que le sous-réseau basse tension peut comporter plusieurs branches et que chaque branche de réseau est monophasée ou multiphasée.

Dans le sous-réseau basse tension, chaque entité Ei est caractérisée par les informations suivantes :

- Producteur et/ou consommateur d'une puissance électrique ;
- Identité de la phase de connexion de l'entité dans le sous-réseau basse tension ;

La figure 2 représente un système de surveillance et de contrôle d'un tel réseau électrique.

Ce système de surveillance et de contrôle comporte une unité de traitement et de commande UC chargée de mettre en œuvre les fonctions suivantes :

- Exécution d'un module d'acquisition de données de mesure D1 ;
- Exécution d'un module d'apprentissage M1 pour construire et mettre à jour un modèle de données MD ;
- Exécution d'un module de contrôle M2 pour déterminer un contrôle adapté du réseau électrique ;
- Exécution d'un module d'enregistrement de données diverses liées à chaque entité Ei et au poste de transformation P du réseau électrique ;

Les modules sont des modules logiciels configurés pour être exécutés par l'unité de traitement et de commande UC. Ils sont mémorisés sur tout support informatique connu et exécutable.

L'unité de traitement et de commande UC comporte typiquement un microprocesseur et des moyens de mémorisation. Elle comporte avantageusement plusieurs entrées destinées à être connectées à des moyens de mesure, tels que des capteurs et des sorties destinées à être connectées à des unités de commande dédiées chacune à la commande d'une entité Ei distincte. Bien entendu, d'autres dispositifs pourront être connectés sur les entrées/sorties de l'unité de traitement et de commande UC.

Les données diverses enregistrées grâce au module d'enregistrement pourront être notamment :

- Des données techniques D10 attachées au réseau électrique ou,
- Des données D20 relatives à chaque entité du sous-réseau basse tension.

Les données techniques D10 peuvent être des valeurs limites acceptables par le poste de transformation P et/ou des tensions maximales et minimales acceptables du réseau électrique.

Les données D20 relatives à chaque entité peuvent être le niveau de puissance attribué à chaque entité selon son contrat d'approvisionnement, des données relatives à la solution de production électrique installée dans chaque entité productrice (par exemple la surface de panneaux solaires, ...), la quantité maximale d'énergie ou de puissance écrêtable par entité et/ou des données relatives à la capacité de stockage de l'entité Ei si celle-ci est productrice...

Le système de surveillance et de contrôle peut comporter une interface homme-machine IHM pour paramétrer le système et notamment la saisie pour enregistrement des données D10, D20 liées à chaque entité Ei du sous-réseau basse tension.

Le système de surveillance et de contrôle peut comporter des moyens de mesure d'une ou plusieurs grandeurs électriques au niveau de chaque entité du sous-réseau basse tension. Ces moyens de mesure sont connectés audit module d'acquisition de données.

Ces moyens de mesure sont avantageusement des capteurs de courant (pour déterminer chaque courant Ii) et de tension (pour déterminer chaque tension Vi) positionnés de manière adaptée, notamment sur le circuit principal d'alimentation de chaque entité Ei et au point de connexion de chaque entité Ei sur le sous-réseau basse tension. Tout autre capteur pourra être employé, tel que des capteurs d'énergie permettant de calculer l'énergie électrique consommée par l'entité et de l'envoyer à destination d'une unité centrale dédiée (un serveur de recueil de données) ou directement vers l'unité de traitement et de commande UC.

L'exécution du module de contrôle M2 est configurée pour mettre en œuvre au moins en partie le procédé de surveillance et de contrôle de l'invention.

Selon un aspect particulier de l'invention, le procédé de surveillance et de contrôle de l'invention consiste ainsi à surveiller le réseau électrique afin de déterminer principalement des données de contrôle en consommation et/ou en production à envoyer à destination d'une ou plusieurs entités Ei du sous-réseau basse tension. D'autres données de contrôle pourraient être envoyées telles que par exemple des données :

- De contrôle pour un stockage d'énergie à destination d'une entité productrice disposant d'une capacité de stockage qui est libre,

- De contrôle pour une libération d'énergie à destination d'une ou plusieurs entités productrices du réseau, si l'approvisionnement par le réseau était coupé ou limité en amont du poste de transformation P,

- De contrôle pour une modification de seuil de disjonction en consommation et/ou en production.

Pour fonctionner, le module de contrôle M2 se base sur au moins un modèle de données MD1 et/ou MD2 obtenu à l'issue d'un apprentissage et pouvant être mis à jour régulièrement lorsque suffisamment de nouvelles données acquises (par exemple au moyen de mesures) deviennent disponibles.

L'apprentissage est mis en œuvre par le module d'apprentissage M1 exécuté par l'unité de traitement et de commande UC.

A l'issue de l'apprentissage, chaque modèle de données MD1, MD2 est unique pour un ensemble de points de fonctionnement.

Pour créer le modèle de données MD1, MD2, le module d'apprentissage M1 s'appuie sur des données acquises par l'unité de traitement et de commande UC.

Ces données peuvent être :

- Des données D2 issues d'un historique de mesures de capteurs au niveau du poste de transformation P ;

- Des données D3 issues d'un historique de mesures de capteurs au niveau des entités Ei du réseau ;

- Des données D4 issues d'un historique de mesures de capteurs divers, par exemple sur différentes branches du réseau ;

- Les données D1 issues des dernières mesures effectuées par tous les capteurs du réseau au niveau des différentes branches du réseau, au niveau de chaque entité Ei du réseau et/ou au niveau du poste de transformation ;

En cas d'absence d'historique de données, les données sont acquises par mesure, grâce aux moyens de mesure décrits ci-dessus, sur une durée d'apprentissage plus ou moins longue selon la taille du réseau électrique à surveiller et selon la période d'échantillonnage. Cette durée peut par exemple être de 24h, plusieurs jours ou même plusieurs mois. La période d'échantillonnage d'acquisition des mesures peut être réglable.

Pour construire le modèle de données MD1, MD2, les données utilisées par l'unité de traitement et de commande UC (issues d'un historique et/ou mesurées sur la durée d'apprentissage) sont au moins les suivantes :

- La puissance active consommée et/ou produite par chaque entité Ei du sous-réseau basse tension ;

- La norme de la tension de chaque entité Ei ;

- La puissance électrique transitant à travers le poste de transformation P du réseau ;

Ces données sont acquises dans le temps, définissant ainsi plusieurs points de fonctionnement successifs.

De manière avantageuse, les données qui sont acquises sont synchronisées entre elles de manière à former lesdits points de fonctionnement.

A titre d'exemple et de manière non limitative, les données acquises sont des données de type RMS ("Root Mean Square"- données efficaces).

À titre d'exemple, le premier tableau ci-dessous représente un historique de données mesurées dans le sous-réseau basse tension, chaque client correspondant à une entité Ei distincte :

| Date | N° client | N° bus électrique | Phase | Puissance (W) | Tension (V) |
|---|---|---|---|---|---|
| ... | ... | ... | ... | ... | ... |
| 2017-01-01 08:00:00 | 1 | 1 | a | 1005 | 231,2 |
| 2017-01-01 08:00:00 | 2 | 1 | b | 2223 | 235,6 |
| 2017-01-01 08:00:00 | 3 | 2 | a | -856 | 245,9 |
| 2017-01-01 08:00:00 | 4 | 17 | c | 8569 | 212,4 |
| ... | ... | ... | ... | ... | ... |
| 2017-01-01 08:10:00 | 1 | 1 | a | 875 | 228,4 |
| 2017-01-01 08:10:00 | 2 | 1 | b | 1850 | 232,4 |
| 2017-01-01 08:10:00 | 3 | 2 | a | -654 | 229,8 |
| 2017-01-01 08:10:00 | 4 | 17 | c | 7506 | 212,4 |
| ... | ... | ... | ... | ... | ... |

Dans ce tableau, on peut voir la puissance consommée ou produite (si négative) par chaque entité ainsi que la tension à leur point de connexion (phase) à différents instants, chaque instant définissant ainsi un point de fonctionnement distinct.

À titre d'exemple, le deuxième tableau ci-dessous représente un historique de données mesurées au niveau du poste de transformation :

| Date | Phase | Intensité (A) | Tension (V) |
|---|---|---|---|
| ... | ... | ... | ... |
| 2017-01-01 08:00:00 | a | 43,5 | 231,2 |
| 2017-01-01 08:00:00 | b | 56,1 | 234,2 |
| 2017-01-01 08:00:00 | c | -10,3 | 228,4 |
| 2017-01-01 08:10:00 | a | 57,2 | 228,2 |
| 2017-01-01 08:10:00 | b | 59,9 | 230,1 |
| 2017-01-01 08:10:00 | c | -5,3 | 230,8 |
| ... | ... | ... | ... |

Ce deuxième tableau montre la tension par phase au secondaire (côté BT) du poste de transformation, ainsi que l'intensité traversant le poste de transformation (mesurée également au secondaire) aux mêmes instants que ceux définis ci-dessus. Cette intensité peut être négative en cas de production électrique d'une ou plusieurs entités du sous-réseau basse tension.

Une fois suffisamment de données acquises, le module d'apprentissage M1 applique un algorithme d'apprentissage sur un couple de données, ce couple étant choisi en fonction des contraintes techniques à respecter.

A titre d'exemple, il peut s'agir de l'un des couples de données suivants :

- Puissance active consommée et/ou produite par entité/norme de la tension de chaque entité. Cela permet ainsi de contrôler la tension au point de connexion de chaque entité.

- Puissance active consommée ou produite par entité/puissance transitant au niveau du poste de transformation. Cela permet de s'assurer que la puissance transitant au transformateur est correcte.

- Puissance active consommée ou produite par chaque entité/norme de l'intensité transitant par un câble. Cela permet de s'assurer que la norme de l'intensité transitant par ce câble est correcte.

Pour le traitement des données acquises, le module d'apprentissage peut mettre en œuvre un algorithme d'apprentissage sous la forme d'une régression linéaire. Tout autre algorithme adapté pourrait être employé (ex : réseau de neurones, ...).

Pour tous les points de fonctionnement, le module d'apprentissage M1 construit un seul modèle de données, un point de fonctionnement correspondant à l'ensemble des mesures prises à un instant donné (correspondant à la colonne date dans les tableaux ci-dessus).

On obtient ainsi pour le couple de données visé, un modèle de données unique se présentant sous la forme d'une matrice. Selon le contrôle effectué, une seule matrice sera alors employée pour le contrôle de ce couple de données, quel que soit le point de fonctionnement.

De manière plus générale, pour le premier couple de données évoqué ci-dessus, le module d'apprentissage M1 génère ainsi un modèle de données MD1 qui comporte :

• Des données représentatives de l'influence de la puissance consommée et/ou produite par chaque entité sur la norme de la tension des autres entités du sous-réseau basse tension ;

Pour le deuxième couple de données évoqué ci-dessus, le module d'apprentissage M1 génère ainsi un modèle de données MD2 qui comporte :

• Des données représentatives de l'influence de la puissance consommée et/ou produite par chaque entité sur la puissance transitant à travers le poste de transformation ;

Chaque modèle de données nous apprend l'influence de la puissance consommée ou produite par les entités sur l'autre paramètre du couple de données.

Dans le modèle de données MD1, la matrice (désignée $A_u$) comporte ainsi plusieurs colonnes, chaque colonne x étant dédiée à une entité Ei distincte du sous-réseau basse tension, et plusieurs lignes, chaque ligne étant également dédiée à une entité Ei distincte du sous-réseau basse tension. Les colonnes et lignes de la matrice sont complétées par des coefficients. Dans chaque colonne, les coefficients Cxy représentent l'influence de la puissance consommée ou produite par une entité du sous-réseau basse tension référencée dans une colonne sur la valeur surveillée de chacune des autres entités du sous-réseau basse tension identifiées sur chaque ligne.

A titre d'exemple, une telle matrice, représentée sous la forme d'un tableau, est la suivante :

|     | E1  | E2  | E3  | Ei  | En  |
| --- | --- | --- | --- | --- | --- |
| E1  | C11 | C21 | C31 | Ci1 | Cn1 |
| E2  | C12 | C22 | C32 | Ci2 | Cn2 |
| E3  | C13 | C23 | C33 | Ci3 | Cn3 |
| Ei  | C1i | C2i | C3i | Cii | Cni |
| En  | C1n | C2n | C3n | Cin | Cnn |

Par exemple, dans le cas d'un apprentissage linéaire, une colonne x de la matrice $A_u$ représente l'influence de la consommation nette d'une entité Ex du sous réseau basse tension sur la norme de la tension de toutes les autres entités du même réseau présentée sur chaque ligne. Ainsi, un coefficient -0,5 en position (x ; y) dans cette matrice indique que si l'entité Ex augmente sa consommation de 1 kW, la tension d'une autre entité Ey du sous réseau diminue de 0,5 V.

Grâce au modèle de données, il est ainsi possible de s'assurer que l'augmentation d'un quota de production (ou de consommation) d'une entité ne risque pas de faire sortir des bornes autorisées la tension d'une autre entité.

Le même fonctionnement s'applique au modèle de données MD2 (représentée par une matrice $A_p$) dans laquelle chaque colonne représente l'influence de la production ou consommation d'une entité du sous-réseau basse tension sur la puissance qui transite au poste de transformation P.

Bien entendu, d'autres données que celles définies ci-dessus pourraient également être acquises (par mesure ou autre) pour enrichir le modèle de données. De manière non limitative, il pourra s'agir de mesures d'intensité dans une ligne particulière du réseau électrique, de mesures attachées à un autre poste de transformation inclus dans le réseau électrique.

Lors de la mise en œuvre du procédé de surveillance et de contrôle, le module de contrôle M2 est configuré pour déterminer les données de contrôle à envoyer aux entités Ei à partir des dernières données D1 acquises, reçues en entrée, et des données dont l'unité de traitement et de commande UC dispose déjà.

Pour cela, le module de contrôle M2 détermine le quota de production $q_{prod\_i}$ et/ou le quota de consommation $q_{cons\_i}$ à allouer à chaque entité du réseau électrique. Il met en place un principe d'optimisation. Le principe d'optimisation permet de déterminer les meilleurs quotas à envoyer aux entités Ei du réseau. Autrement dit, il s'agira de trouver une solution qui puisse satisfaire le principe d'optimisation visé et donc de déterminer tous les quotas qui permettent de remplir un objectif d'optimisation. Cet objectif est défini par une fonction objectif f. Il s'agira par exemple de déterminer le quota de production $q_{prod\_i}$ ou le quota de consommation $q_{cons\_i}$ à allouer à chaque entité Ei qui permet de :

- Maximiser la somme des quotas attribués aux entités,

- Maximiser l'équité des restrictions de consommation entre les entités, ou

- Maximiser la somme du logarithme de la puissance attribuée à chaque entité.

Selon le ou les couples de données surveillé, le module de contrôle M2 s'appuie sur une ou plusieurs des valeurs mesurées suivantes au cours du temps :

- Puissance (active, éventuellement réactive) électrique consommée et/ou produite (que les deux soient mesurées indépendamment ou que seule la somme soit effectivement reportée) par une ou plusieurs entités du réseau ;

- Puissance électrique transitant dans une branche du réseau électrique, dans une entité Ei et/ou au niveau du poste de transformation P ;

- Norme de la tension Vi d'une ou plusieurs entités du sous-réseau basse tension à son point de connexion ;

- Tension détaillée (partie réelle+partie imaginaire) pour une ou plusieurs entités à leur point de connexion ;

- Norme de l'intensité circulant dans une ou plusieurs branches du réseau ;

- Intensité détaillée (partie réelle+partie imaginaire) dans une ou plusieurs branches du réseau ;

Le module de contrôle M2 fonctionne par pas de temps successifs, préférentiellement tous d'une durée identique. Pour chaque nouveau pas de temps, le module de contrôle M2 est chargé de déterminer le quota de production $q_{prod\_i}$ et le quota de consommation $q_{cons\_i}$ à allouer à chaque entité Ei. Le module de contrôle M2 détermine séparément le quota de production et le quota de consommation à allouer à chaque entité. Bien entendu, si aucune entité du réseau surveillé n'est productrice, déterminer des quotas de production sera inutile et inversement.

Pour déterminer le quota de production $q_{prod\_i}$ à allouer à chaque entité Ei, le module de contrôle M2 met en œuvre les étapes suivantes :

- Il acquiert des données de mesure D1 de la puissance consommée et/ou produite pour chaque entité Ei du réseau ; Ces données sont mesurées à des pas de temps successifs (par exemple toutes les 10 minutes) par les moyens de mesure ;

- Il détermine, pour chaque entité Ei, la valeur minimale $q^{min}(t)$ et la valeur maximale $q^{max}(t)$ de quota de production qu'il peut attribuer à l'entité Ei ; Pour fixer ces valeurs limites, il peut notamment se baser sur les données de production mesurées au pas de temps précédent pour cet entité Ei ;

- Il détermine pour chaque entité Ei une prévision de la puissance consommée $\widetilde{p_{cons}}(t)$ par chaque entité Ei pour ce nouveau pas de temps ; Cette prévision est par exemple effectuée en tenant compte des données de puissance mesurées à un ou plusieurs pas de temps précédents ;

- Il insère ces données dans un problème d'optimisation tenant compte des différentes contraintes fixées aux étapes précédentes ;

- La résolution du problème d'optimisation lui permet d'obtenir le quota de production $q_{prod\_i}$ à allouer à chaque entité Ei du réseau ;

- De manière optionnelle, le quota obtenu pour chaque entité Ei peut être corrigé ;

Ces différentes étapes sont mises en œuvre de manière identique pour déterminer le quota de consommation $q_{cons\_i}$ à allouer à chaque entité Ei, la prévision de la puissance consommée $\widetilde{p_{cons}}(t)$ étant remplacée par une prévision de la puissance produite $\widetilde{p_{prod}}(t)$.

Dans le problème d'optimisation, le module de contrôle s'appuie sur au moins un modèle de données (MD1 ou MD2) appris lors de la phase d'apprentissage, correspondant au couple de données surveillé.

Ci-dessous, nous décrivons le problème d'optimisation géré par le module de contrôle M2 lors de la détermination des quotas de production puis des quotas de consommation à allouer aux n entités Ei du réseau. De manière non limitative, ces problèmes d'optimisation sont établis sur la base des deux modèles de données MD1 et MD2 pris en combinaison, mais il faut comprendre qu'ils pourraient être établis sur la base de l'un des deux modèles uniquement si un seul couple de données était surveillé. A l'inverse, d'autres modèles de données correspondant à d'autres couples de données surveillées pourraient également être intégrés. Le raisonnement est effectué pour les n entités Ei.

- Quota de production

Pour la production, le problème d'optimisation à résoudre est le suivant :

$$
\begin{cases}
\max_{q \in \mathbb{R}^n} \ f(q) \\
u^{\min} \leqslant A_u(\widetilde{p_{cons}}(t) - q) + b_u \leqslant u^{\max} \\
p_{trans}^{\min} \leqslant A_p(\widetilde{p_{cons}}(t) - q) + b_p \leqslant p_{trans}^{\max} \\
q^{\min}(t) \leqslant q \leqslant q^{\max}(t)
\end{cases}
\tag{1}
$$

Avec :

- q le quota de production à allouer pour le pas de temps t pour les n entités du réseau (q comportant plusieurs quotas $q_{prod\_i}$) ;
- f la fonction objectif qui dépend du quota qui est alloué à chaque entité ;
- $p_{cons}(t - 1)$ et $p_{prod}(t - 1)$ qui sont les mesures de puissance en consommation et en production au pas de temps précédent ($t$ - 1) ;
- $\widetilde{p_{cons}}(t)$ qui est une prévision de la consommation des entités du réseau pour le pas de temps à venir ($t$). Cette prédiction peut dépendre d'autres valeurs mesurées (notamment $p_{cons}(t$ - 1) et $p_{prod}(t$ - 1)) ;
- $u^{min}$ et $u^{max}$ la valeur minimale et la valeur maximale de tension acceptable pour chaque entité du réseau, correspondant à des données D10 évoquées ci-dessus ;
- $p_{trans}^{min}$ et $p_{trans}^{max}$ la valeur minimale et la valeur maximale de puissance acceptable au niveau du transformateur, correspondant à des données D10 évoquées ci-dessus ;
- $q^{min}(t)$ et $q^{max}(t)$ qui correspondent à la valeur minimale et à la valeur maximale de quota attribuable à chaque entité. Elles dépendent du temps et sont ajustées avant la résolution de l'équation (1) ci-dessus. Elles peuvent être choisies en fonction des mesures effectuées au pas de temps précédent ($p_{cons}(t$ - 1) et $p_{prod}(t$ - 1)), mais également des informations (données D20) diverses sur les entités et leurs installations électriques (puissance crête des installations solaires, puissance acceptable par leur disjoncteur...) ou bien de données contractuelles.
- $(A_p, b_p)$ et $(A_u, b_u)$ qui sont les matrices des modèles de données MD1, MD2 appris lors de la phase d'apprentissage.

- Quota de consommation

Pour la consommation, le problème d'optimisation à résoudre est le suivant :

$$\begin{cases} \max_{q \in \mathbb{R}^n} \ f(q) \\ \quad u^{\min} \leqslant A_u(q - \widetilde{p_{\mathrm{prod}}}(t)) + b_u \leqslant u^{\max} \\ \quad p_{\mathrm{trans}}^{\min} \leqslant A_p(q - \widetilde{p_{\mathrm{prod}}}(t)) + b_p \leqslant p_{\mathrm{trans}}^{\max} \\ \quad q^{\min}(t) \leqslant q \leqslant q^{\max}(t) \end{cases} \qquad (2)$$

Avec :

- q le quota de consommation à allouer pour le pas de temps t pour les n entités du réseau (q comportant plusieurs quotas $q_{cons\_i}$) ;

- f la fonction objectif qui dépend du quota qui est alloué à chaque entité. Elle peut être différente de la fonction f de l'équation (1) ;

- $\widetilde{p_{prod}}(t)$ qui est une prévision de la consommation des entités du réseau pour le pas de temps à venir ($t$). Cette prédiction peut dépendre d'autres valeurs mesurées (notamment $p_{cons}(t$ - 1) et $p_{prod}(t$ - 1)) ;

- $u^{min}$ et $u^{max}$ la valeur minimale et la valeur maximale de tension acceptable pour chaque entité du réseau, correspondant à des données D10 évoquées ci-dessus ;

- $p_{trans}^{min}$ et $p_{trans}^{max}$ la valeur minimale et la valeur maximale de puissance acceptable au niveau du transformateur, correspondant à des données D10 évoquées ci-dessus ;

- $q^{min}(t)$ et $q^{max}(t)$ qui correspondent à la valeur minimale et à la valeur maximale de quotas attribuables à chaque entité. Elles sont différentes de celles définies pour la production mais dépendent des mêmes facteurs. Elles peuvent en effet être choisies en fonction des mesures effectuées au pas de temps précédent ($p_{cons}(t$ -1) et $p_{prod}(t$ - 1)), mais également des informations (données D20) diverses sur les entités et leurs installations électriques (puissance crête des installations solaires, puissance acceptable par leur disjoncteur...) ou bien de données contractuelles.

- $(A_p, b_p)$ et $(A_u, b_u)$ qui sont les matrices des modèles de données MD1, MD2 appris lors de la phase d'apprentissage.

De manière non limitative, la fonction "objectif" consiste par exemple à optimiser des critères électrotechniques comme la réduction des pertes, à maximiser la somme de la puissance produite pas les entités, à maximiser le quota minimum accordé aux entités Ei, à maximiser le logarithme de la puissance accordée à chaque entité...

Le module de contrôle M2 détermine ensuite les données de contrôle Dx à envoyer à destination d'une ou plusieurs des entités en fonction du quota en production et/ou en consommation ($q_{prod\_i}$, $q_{cons\_i}$) déterminé pour chaque entité du réseau grâce aux raisonnements décrits ci-dessus. A partir des données de contrôle reçues, une unité de commande associée à chaque entité Ei sera en mesure de mener des actions appropriées (écrêtage, délestage...).

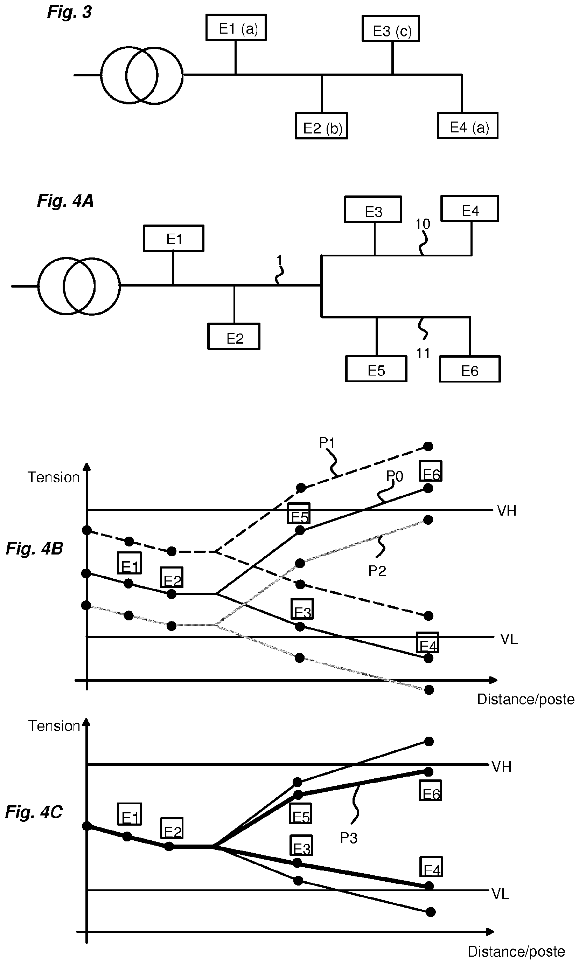

En référence aux figures 3 et 4, plusieurs exemples de contrôles mis en œuvre sont détaillés ci-dessous.

### Premier cas de fonctionnement - Figure 3

Considérons le réseau simplifié de la figure 3. Il est constitué d'au moins les quatre entités E1-E4 dessinées, connectées sur une seule branche du réseau. Les trois premières entités sont consommatrices et productrices et l'entité E4 n'est que consommatrice.

L'entité E1 est connectée sur la phase (a) du sous-réseau basse tension ;

L'entité E2 est connectée sur la phase (b) du sous-réseau basse tension ;

L'entité E3 est connectée sur la phase (c) du sous-réseau basse tension ;

L'entité E4 est connectée sur la phase (a) du sous-réseau basse tension ;

Un jour de grand soleil, les panneaux solaires des entités E1, E2, E3 injectent énormément de puissance sur le réseau et par conséquent la tension le long de la ligne principale augmente pour atteindre son maximum sur la phase (a) au niveau de l'entité E4.

Dans ce cas de fonctionnement, le modèle de données MD1, représenté sous la forme de la matrice Au, serait le suivant :

| Client (phase) | 1(a) | 2(b) | 3(c) | 4(a) |
|---|---|---|---|---|
| 1(a) | -0,5 | 0,05 | 0,08 | -0,2 |
| 2(b) | 0,08 | -0,55 | 0,05 | 0,04 |
| 3(c) | 0,09 | 0,05 | -0,6 | 0,03 |
| 4(a) | -0,3 | 0,04 | 0,01 | -0,4 |

Une stratégie courante consisterait à écrêter l'entité productrice la plus proche de l'entité E4, c'est-à-dire l'entité E3. Mais l'entité E3 est connectée sur la phase (c). Un écrêtement de sa production entraînerait donc une augmentation (légère) de la tension sur la phase (a) au lieu de la diminuer.

On constate en effet que sur la quatrième colonne de la matrice Au, l'augmentation d'un watt dans la consommation de l'entité E4 :

- réduit la tension de l'entité E1 de 0,2 V,

- augmente la tension de l'entité E2 de 0,04 V,

- augmente la tension de l'entité E3 de 0,03 V,

- réduit la tension de l'entité E4 de 0,4 V.

Pour réduire la tension de l'entité E4, il faut donc agir préférentiellement sur la production de l'entité E4 (0,4>0,3). Mais comme l'entité E4 n'a pas de moyen de production, il faut donc agir préférentiellement l'entité E1 pour réduire efficacement la tension de l'entité E4.

Grâce au modèle de données MD, le procédé de surveillance et de contrôle de l'invention est capable de tenir compte des influences en augmentation ou en diminution d'une entité sur une autre et est donc configuré pour déterminer sur quelle entité, une action d'écrêtage doit être menée.

### Deuxième cas de fonctionnement - Figures 4A, 4B et 4C

Considérons le réseau simplifié de la figure 4A dans lequel :

E1 à E4=Consommateur
E5 et E6=Consommateur+Producteur

Le sous-réseau basse tension comporte une branche principale 1 sur laquelle sont connectées les entités E1 et E2 et deux branches secondaires 10, 11 parallèles reliées en un point de connexion à la branche principale, une première branche secondaire 10 sur laquelle sont connectées les entités E3 et E4 et une deuxième branche secondaire 11 sur laquelle sont connectées les entités E5 et E6.

Pour simplifier, toutes les entités E1 à E6 sont connectées sur la même phase du sous-réseau basse tension.

Lors d'un fort ensoleillement, les entités E5 et E6 produisent beaucoup d'énergie électrique, qu'elles envoient sur le réseau électrique. Cela a pour conséquence d'augmenter la tension sur la deuxième branche secondaire 11. En revanche, si les entités E3 et E4 consomment beaucoup, la tension sur la première branche secondaire 10 a tendance à diminuer. Ceci est illustré par le profil P0 représenté sur les figures 4B et 4C. Sur ce profil, on peut voir que, dans la situation évoquée ci-dessus, l'entité E6 présente une tension à son point de connexion qui est supérieure à une limite de tension (VH) et l'entité E4 présente une tension à son point de connexion qui est inférieure à une limite de tension (VL).

Si les deux effets se produisent simultanément, la tension ne peut plus être simplement réglée avec un poste de transformation à changement de prises comme c'est le cas habituellement.

La figure 4B illustre la réponse qui pourrait être donnée aujourd'hui avec un poste de transformation à changement de prise. Un transformateur à changement de prise permettrait ou bien de régler les problèmes de sous-tension en aggravant les problèmes de surtension (profil P1 en pointillés-entité E4 revient au-dessus de VL - entité E5 dépasse la limite VH) ou bien de régler les problèmes de surtension en aggravant les problèmes de sous-tension (profil P2 en trait gris-entité E6 revient sous la limite VH - entité E3 passe sous la limite VL).

Dans cet exemple, la matrice Au pourrait se présenter sous la forme suivante :

| Client | 1 | 2 | 3 | 4 | 5 | 6 |
|--------|-------|-------|-------|-------|-------|-------|
| 1 | −0,7 | −0,5 | −0,2 | −0,15 | −0,2 | −0,15 |
| 2 | −0,5 | −0,85 | −0,4 | −0,3 | −0,45 | −0,2 |
| 3 | −0,43 | −0,54 | −0,68 | −0,5 | -0.08 | -0.09 |
| 4 | −0,32 | −0,45 | −0,68 | −0,86 | -0.11 | -0.08 |
| 5 | −0,20 | −0,24 | -0.09 | -0.06 | −0,84 | −0,52 |
| 6 | −0,21 | −0,23 | -0.05 | -0.03 | −0,74 | −0,89 |

A partir de cette matrice, il est possible de constater que les deux entités E5 et E6 n'ont que très peu d'influence sur les deux entités E3 et E4 et inversement, ceci grâce à la faiblesse des coefficients présents dans la matrice. Sur la base de ces coefficients, la résolution du problème d'optimisation ne choisira pas d'écrêter la production de l'entité E3 ou E4 en cas de surtension au niveau des entités E5 ou E6 (et inversement).

La solution de l'invention permet en outre d'apprendre que la production des entités E5 et E6 entraîne une augmentation de la tension sur leur branche alors que la consommation des entités E3 et E4 entraînent une diminution de la tension sur leur branche. En déterminant sur quelles entités les actions d'écrêtement et d'effacement doivent être menées, la solution de l'invention permet d'obtenir un profil de tension (Profil P3-figure 4C) permettant de faire rentrer toutes les entités Ei dans les limites de fonctionnement du sous-réseau basse tension.

On comprend que la solution de l'invention présente ainsi de nombreux avantages, parmi lesquels :

- Elle ne nécessite aucune reconstitution du plan du réseau électrique, comme cela est souvent réalisé dans l'état de la technique ;
- Elle peut permettre un contrôle du réseau électrique à partir d'un seul modèle de données, adapté au couple de données surveillées ;

## Revendications

1. Procédé de surveillance et de contrôle d'un réseau électrique qui comporte au moins un poste de transformation (P) délimitant un sous-réseau moyenne tension et un sous-réseau basse tension et plusieurs entités (Ei) du sous-réseau basse tension, chaque entité étant consommatrice et/ou productrice d'électricité dans le sous-réseau basse tension, ledit procédé étant mis en œuvre par un système de surveillance et de contrôle comprenant au moins une unité de traitement, **caractérisé en ce que** ledit procédé comporte :

    - Une étape d'acquisition d'une puissance électrique consommée et/ou produite par chaque entité (Ei) du sous-réseau basse tension à des pas de temps successifs,
    - Une étape de détermination à chaque nouveau pas de temps d'un quota (q) de production et/ou de consommation à attribuer à chaque entité (Ei),
    - Une étape de détermination d'une valeur minimale ($q^{min}(t)$) et d'une valeur maximale ($q^{max}(t)$) de quota de production et/ou de consommation à respecter pour chaque entité (Ei) en tenant compte de la puissance électrique consommée et/ou produite à un pas de temps précédant ($p_{cons}(t-1)$, $p_{prod}(t-1)$) ledit nouveau pas de temps,
    - Une étape de détermination d'une puissance électrique consommée et/ou produite prévisionnelle $(\widetilde{p_{cons}}(t),\ \widetilde{p_{prod}}(t))$ pour chaque entité, basée sur ladite puissance électrique consommée et/ou produite acquise à un pas de temps précédant ledit nouveau pas de temps,
    - Ledit quota (q) de production et/ou de consommation étant une solution à un problème d'optimisation tenant compte :

        - D'au moins un modèle de données (MD1, MD2) unique acquis par apprentissage, appliqué à chaque nouveau pas de temps et qui comporte des données représentatives d'une influence de la puissance électrique consommée et/ou produite par chaque entité (Ei) sur au moins une grandeur électrique surveillée,
        - De contraintes techniques à respecter pour ladite au moins une grandeur surveillée,
        - De ladite valeur minimale et valeur maximale de quota de production et/ou de consommation déterminée,

- De ladite puissance électrique consommée et/ou produite prévisionnelle déterminée pour chaque entité,
- D'une fonction d'optimisation choisie pour allouer les quotas de production et/ou consommation aux entités,
- Une étape de détermination de données de contrôle (Dx) en production et/ou en consommation électrique à appliquer à une ou plusieurs entités du sous-réseau basse tension en tenant compte de chaque quota de production et/ou de consommation déterminé.

2. Procédé selon la revendication 1, **caractérisé en ce que** ladite au moins une grandeur électrique surveillée correspond à la norme de tension de chaque entité à son point de connexion.

3. Procédé selon la revendication 2, **caractérisé en ce que** lesdites contraintes à respecter pour ladite au moins une grandeur électrique surveillée correspondent à une valeur minimale ($u^{min}$) de tension et une valeur maximale ($u^{max}$) de tension pour chaque entité (Ei).

4. Procédé selon la revendication 1, **caractérisé en ce que** ladite au moins une grandeur électrique surveillée correspond à la puissance électrique transitant au niveau du poste de transformation.

5. Procédé selon la revendication 2, **caractérisé en ce que** lesdites contraintes à respecter pour ladite au moins une grandeur électrique surveillée correspondent à une valeur minimale $\left(p_{trans}^{min}\right)$ de puissance transitant au transformateur et une valeur maximale $\left(p_{trans}^{max}\right)$ de puissance transitant au niveau du poste de transformation (P).

6. Procédé selon la revendication 1, **caractérisé en ce que** ladite au moins une grandeur électrique surveillée correspond à la norme de l'intensité transitant par un câble.

7. Procédé selon l'une des revendications 1 à 6, **caractérisé en ce que** ladite fonction d'optimisation est choisie parmi :

   - Maximiser la somme des quotas de production et/ou de consommation attribués aux entités (Ei),
   - Maximiser l'équité des restrictions de consommation entre les entités, ou
   - Maximiser le logarithme de la puissance attribuée à chaque entité (Ei).

8. Procédé selon l'une des revendications 1 à 7, **caractérisé en ce que** l'étape de détermination d'une valeur minimale ($q^{min}(t)$) et d'une valeur maximale ($q^{max}(t)$) de quota de production et/ou de consommation à respecter pour chaque entité (Ei) est réalisée en tenant compte de données (D20) techniques relatives à chaque entité (Ei), choisies parmi une ou plusieurs des données suivantes :

   - Un niveau de puissance attribué à chaque entité (Ei) selon son contrat d'approvisionnement,
   - Des données relatives à la solution de production électrique installée dans chaque entité productrice,
   - Une quantité maximale d'énergie ou de puissance écrêtable par entité,
   - Des données relatives à la capacité de stockage de l'entité (Ei) si celle-ci est productrice.

9. Procédé selon l'une des revendications 1 à 8, **caractérisé en ce qu'**il comporte une étape de détermination du nombre de nouvelles données électriques du réseau électrique et une étape de mise à jour dudit au moins un modèle de données (MD1, MD2) du réseau électrique lorsque suffisamment de données électriques acquises sont disponibles.

10. Système de surveillance et de contrôle d'un réseau électrique qui comporte au moins un poste de transformation (P) délimitant un sous-réseau moyenne tension et un sous-réseau basse tension et plusieurs entités (Ei) du sous-réseau basse tension, chaque entité étant consommatrice et/ou productrice d'électricité dans le sous-réseau basse tension, **caractérisé en ce que** ledit système comporte :

    - Un module d'acquisition d'une puissance électrique consommée et/ou produite par chaque entité (Ei) du sous-réseau basse tension à des pas de temps successifs,
    - Un module de contrôle (M2) configuré pour :

      - Déterminer à chaque nouveau pas de temps un quota (q) de production et/ou de consommation à attribuer à chaque entité (Ei),
      - Déterminer une valeur minimale ($q^{min}(t)$) et une valeur maximale ($q^{max}(t)$) de quota de production et/ou de consommation à respecter pour chaque entité (Ei) en tenant compte de la puissance électrique consommée et/ou produite à un pas de temps précédent ($p_{cons}(t-1)$, $p_{prod}(t-1)$) ledit nouveau pas de temps,

- Déterminer une puissance électrique consommée et/ou produite prévisionnelle $(\widetilde{p_{cons}}(t), \widetilde{p_{prod}}(t))$ pour chaque entité, basée sur ladite puissance électrique consommée et/ou produite acquise à un pas de temps précédent ledit nouveau pas de temps,

- ledit quota (q) de production et/ou de consommation étant une solution à un problème d'optimisation tenant compte :

- D'au moins un modèle de données (MD1, MD2) unique acquis par apprentissage, appliqué à chaque nouveau pas de temps et qui comporte des données représentatives d'une influence de la puissance électrique consommée et/ou produite par chaque entité (Ei) sur au moins une grandeur électrique surveillée,
- De contraintes techniques à respecter pour ladite au moins une grandeur surveillée,
- De ladite valeur minimale et valeur maximale de quota de production et/ou de consommation déterminée,
- De ladite puissance électrique consommée et/ou produite prévisionnelle déterminée pour chaque entité,
- D'une fonction d'optimisation choisie pour allouer les quotas de production et/ou consommation aux entités,
- Déterminer des données de contrôle (Dx) en production et/ou en consommation électrique à appliquer à une ou plusieurs entités du sous-réseau basse tension en tenant compte de chaque quota de production et/ou de consommation déterminé.

11. Système selon la revendication 10, **caractérisé en ce que** ladite au moins une grandeur électrique surveillée correspond à la norme de tension de chaque entité à son point de connexion.

12. Système selon la revendication 11, **caractérisé en ce que** lesdites contraintes à respecter pour ladite au moins une grandeur électrique surveillée correspondent à une valeur minimale ($u^{min}$) de tension et une valeur maximale ($u^{max}$) de tension pour chaque entité (Ei).

13. Système selon la revendication 10, **caractérisé en ce que** ladite au moins une grandeur électrique surveillée correspond à la puissance électrique transitant au niveau du poste de transformation.

14. Système selon la revendication 13, **caractérisé en ce que** lesdites contraintes à respecter pour ladite au moins une grandeur électrique surveillée correspondent à une valeur minimale $\left(p_{trans}^{min}\right)$ de puissance transitant au transformateur et une valeur maximale $\left(p_{trans}^{max}\right)$ de puissance transitant au niveau du poste de transformation (P).

15. Système selon la revendication 10, **caractérisé en ce que** ladite au moins une grandeur électrique surveillée correspond à la norme de l'intensité transitant par un câble.

16. Système selon l'une des revendications 10 à 15, **caractérisé en ce que** ladite fonction d'optimisation est choisie parmi :

- Maximiser la somme des quotas de production et/ou de consommation attribués aux entités (Ei),
- Maximiser l'équité des restrictions de consommation entre les entités, ou
- Maximiser le logarithme de la puissance attribuée à chaque entité (Ei).

17. Système selon l'une des revendications 10 à 16, **caractérisé en ce que** le module de contrôle (M2) est configuré pour déterminer une valeur minimale ($q^{min}(t)$) et une valeur maximale ($q^{max}(t)$) de quota de production et/ou de consommation à respecter pour chaque entité (Ei) en tenant compte de données (D20) techniques relatives à chaque entité (Ei), choisies parmi une ou plusieurs des données suivantes :

- Un niveau de puissance attribué à chaque entité (Ei) selon son contrat d'approvisionnement,
- Des données relatives à la solution de production électrique installée dans chaque entité productrice,
- Une quantité maximale d'énergie ou de puissance "écrêtable" par entité,
- Des données relatives à la capacité de stockage de l'entité (Ei) si celle-ci est productrice.

**18.** Système selon l'une des revendications 10 à 17, **caractérisé en ce qu'**il comporte un module d'apprentissage (M1) configuré pour déterminer un nombre de nouvelles données électriques du réseau électrique et une mise à jour dudit au moins un modèle de données (MD1, MD2) du réseau électrique lorsque suffisamment de données électriques acquises sont disponibles.

**Patentansprüche**

**1.** Verfahren zur Überwachung und Steuerung eines Stromnetzes, das mindestens eine Umspannstation (P) umfasst, die ein Mittelspannungsteilnetz und ein Niederspannungsteilnetz und mehrere Einheiten (Ei) des Niederspannungsteilnetzes abgrenzt, wobei jede Einheit Stromverbraucher und/oder -erzeuger in dem Niederspannungsteilnetz ist, wobei das Verfahren von einem Überwachungs- und Steuerungssystem umgesetzt wird, das mindestens eine Verarbeitungseinheit beinhaltet, **dadurch gekennzeichnet, dass** das Verfahren umfasst:

- einen Schritt des Erfassens einer elektrischen Leistung, die von jeder Einheit (Ei) des Niederspannungsteilnetzes bei aufeinanderfolgenden Zeitschritten verbraucht und/oder erzeugt wird,
- einen Schritt des Bestimmens, bei jedem neuen Zeitschritt, einer Erzeugungs- und/oder Verbrauchsquote (q), die jeder Einheit (Ei) zuzuordnen ist,
- einen Schritt des Bestimmens eines Mindestwerts ($q^{min}(t)$) und eines Höchstwerts ($q^{max}(t)$) für die Erzeugungs- und/oder Verbrauchsquote, die für jede Einheit (Ei) zu beachten sind, unter Berücksichtigung der bei einem Zeitschritt ($p_{cons}(t$ - $1)$, $p_{prod}(t$ - $1)$) vor dem neuen Zeitschritt verbrauchten und/oder erzeugten elektrischen Leistung,
- einen Schritt des Bestimmens einer voraussichtlichen verbrauchten und/oder erzeugten elektrischen Leistung $(\widetilde{p_{cons}}(t), \widetilde{p_{prod}}(t))$ für jede Einheit, die auf der verbrauchten und/oder erzeugten elektrischen Leistung beruht, die bei einem Zeitschritt vor dem neuen Zeitschritt erfasst wurde,
- wobei die Erzeugungs- und/oder Verbrauchsquote (q) eine Lösung eines Optimierungsproblems ist unter Berücksichtigung:

- mindestens eines einzigen, durch Erlernen erfassten Datenmodells (MD1, MD2), das auf jeden neuen Zeitschritt angewandt wird und das Daten umfasst, die repräsentativ für einen Einfluss der von jeder Einheit (Ei) verbrauchten und/oder erzeugten elektrischen Leistung auf mindestens eine überwachte elektrische Größe sind,
- von technischen Einschränkungen, die für die mindestens eine überwachte Größe zu beachten sind,
- des bestimmten Mindest- und Höchstwerts für die Erzeugungs- und/oder Verbrauchsquote,
- der für jede Einheit bestimmten voraussichtlichen verbrauchten und/oder erzeugten elektrischen Leistung,
- einer Optimierungsfunktion, die gewählt wird, um die Erzeugungs- und/oder Verbrauchsquoten den Einheiten zuzuweisen,

- einen Schritt des Bestimmens von Steuerungsdaten (Dx) für Stromerzeugung und/oder -verbrauch, die auf eine oder mehrere Einheiten des Niederspannungsteilnetzes anzuwenden sind, unter Berücksichtigung jeder bestimmten Erzeugungs- und/oder Verbrauchsquote.

**2.** Verfahren nach Anspruch 1, **dadurch gekennzeichnet, dass** die mindestens eine überwachte elektrische Größe der Spannungsnorm jeder Einheit an ihrem Anschlusspunkt entspricht.

**3.** Verfahren nach Anspruch 2, **dadurch gekennzeichnet, dass** die für die mindestens eine überwachte elektrische Größe zu beachtenden Einschränkungen einem Spannungsmindestwert ($u^{min}$) und einem Spannungshöchstwert ($u^{max}$) für jede Einheit (Ei) entsprechen.

**4.** Verfahren nach Anspruch 1, **dadurch gekennzeichnet, dass** die mindestens eine überwachte elektrische Größe der elektrischen Leistung entspricht, die an der Umspannstation übertragen wird.

**5.** Verfahren nach Anspruch 2, **dadurch gekennzeichnet, dass** die für die mindestens eine überwachte elektrische Größe zu beachtenden Einschränkungen einem Mindestwert $\left(p_{trans}^{min}\right)$ der am Transformator übertragenen Leistung und einem Höchstwert $\left(p_{trans}^{max}\right)$ der an der Umspannstation (P) übertragenen Leistung entsprechen.

6. Verfahren nach Anspruch 1, **dadurch gekennzeichnet, dass** die mindestens eine überwachte elektrische Größe der Norm der über ein Kabel übertragenen Stromstärke entspricht.

7. Verfahren nach einem der Ansprüche 1 bis 6, **dadurch gekennzeichnet, dass** die Optimierungsfunktion gewählt ist unter:

   - Maximieren der Summe der den Einheiten (Ei) zugeordneten Erzeugungs- und/oder Verbrauchsquoten,
   - Maximieren der Gerechtigkeit der Verbrauchsbeschränkungen zwischen den Einheiten oder
   - Maximieren des Logarithmus für die jeder Einheit (Ei) zugeordnete Leistung.

8. Verfahren nach einem der Ansprüche 1 bis 7, **dadurch gekennzeichnet, dass** der Schritt des Bestimmens eines Mindestwerts ($q^{min}(t)$) und eines Höchstwerts ($q^{max}(t)$) für die Erzeugungs- und/oder Verbrauchsquote, die für jede Einheit (Ei) zu beachten sind, unter Berücksichtigung von technischen Daten (D20) bezüglich jeder Einheit (Ei) ausgeführt wird, die unter einem oder mehreren der folgenden Daten gewählt werden:

   - einem Leistungsniveau, das jeder Einheit (Ei) gemäß ihrem Versorgungsvertrag zugeordnet wird,
   - Daten bezüglich der Stromerzeugungslösung, die in jeder erzeugenden Einheit installiert ist,
   - einer kappbaren Energie- oder Leistungshöchstmenge je Einheit,
   - Daten bezüglich der Speicherkapazität der Einheit (Ei), wenn sie erzeugend ist.

9. Verfahren nach einem der Ansprüche 1 bis 8, **dadurch gekennzeichnet, dass** es einen Schritt des Bestimmens der Anzahl neuer elektrischer Daten des Stromnetzes und einen Schritt des Aktualisierens des mindestens einen Datenmodells (MD1, MD2) des Stromnetzes, wenn genügend erfasste elektrische Daten verfügbar sind, umfasst.

10. System zur Überwachung und Steuerung eines Stromnetzes, das mindestens eine Umspannstation (P) umfasst, die ein Mittelspannungsteilnetz und ein Niederspannungsteilnetz und mehrere Einheiten (Ei) des Niederspannungsteilnetzes abgrenzt, wobei jede Einheit Stromverbraucher und/oder -erzeuger im Niederspannungsteilnetz ist, **dadurch gekennzeichnet, dass** das System umfasst:

    - ein Modul zum Erfassen einer elektrischen Leistung, die von jeder Einheit (Ei) des Niederspannungsteilnetzes bei aufeinanderfolgenden Zeitschritten verbraucht und/oder erzeugt wird,
    - ein Steuerungsmodul (M2), das dazu ausgestaltet ist:

       - bei jedem neuen Zeitschritt eine Erzeugungs- und/oder Verbrauchsquote (q) zu bestimmen, die jeder Einheit (Ei) zuzuordnen ist,
       - einen Mindestwert ($q^{min}(t)$) und einen Höchstwert ($q^{max}(t)$) für die Erzeugungs- und/oder Verbrauchsquote zu bestimmen, die für jede Einheit (Ei) zu beachten sind, unter Berücksichtigung der bei einem Zeitschritt ($p_{cons}(t\text{-}1)$, $p_{prod}(t\text{-}1)$) vor dem neuen Zeitschritt verbrauchten und/oder erzeugten elektrischen Leistung,
       - eine voraussichtliche verbrauchte und/oder erzeugte elektrische Leistung ($\widetilde{p_{cons}}(t)$, $\widetilde{p_{prod}}(t)$) für jede Einheit zu bestimmen, die auf der verbrauchten und/oder erzeugten elektrischen Leistung beruht, die bei einem Zeitschritt vor dem neuen Zeitschritt erfasst wurde,
       - wobei die Erzeugungs- und/oder Verbrauchsquote (q) eine Lösung für ein Optimierungsproblem ist unter Berücksichtigung:

          - mindestens eines einzigen, durch Erlernen erfassten Datenmodells (MD1, MD2), das auf jeden neuen Zeitschritt angewandt wird und das Daten umfasst, die repräsentativ für einen Einfluss der von jeder Einheit (Ei) verbrauchten und/oder erzeugten elektrischen Leistung auf mindestens eine überwachte elektrische Größe sind,
          - von technischen Einschränkungen, die für die mindestens eine überwachte Größe zu beachten sind,
          - des bestimmten Mindest- und Höchstwerts für die Erzeugungs- und/oder Verbrauchsquote,
          - der für jede Einheit bestimmten voraussichtlichen verbrauchten und/oder erzeugten elektrischen Leistung,
          - einer Optimierungsfunktion, die gewählt wird, um die Erzeugungs- und/oder Verbrauchsquoten den Einheiten zuzuweisen,

    - Steuerungsdaten (Dx) für Stromerzeugung und/oder -verbrauch zu bestimmen, die auf eine oder mehrere Einheiten des Niederspannungsteilnetzes anzuwenden sind, unter Berücksichtigung jeder bestimmten Erzeugungs- und/oder Verbrauchsquote.

**11.** System nach Anspruch 10, **dadurch gekennzeichnet, dass** die mindestens eine überwachte elektrische Größe der Spannungsnorm jeder Einheit an ihrem Anschlusspunkt entspricht.

**12.** System nach Anspruch 11, **dadurch gekennzeichnet, dass** die für die mindestens eine überwachte elektrische Größe zu beachtenden Einschränkungen einem Spannungsmindestwert ($u^{min}$) und einem Spannungshöchstwert ($u^{max}$) für jede Einheit (Ei) entsprechen.

**13.** System nach Anspruch 10, **dadurch gekennzeichnet, dass** die mindestens eine überwachte elektrische Größe der elektrischen Leistung entspricht, die an der Umspannstation übertragen wird.

**14.** System nach Anspruch 13, **dadurch gekennzeichnet, dass** die für die mindestens eine überwachte elektrische Größe zu beachtenden Einschränkungen einem Mindestwert $\left(p_{trans}^{min}\right)$, der am Transformator übertragenen Leistung und einem Höchstwert $\left(p_{trans}^{max}\right)$ der an der Umspannstation (P) übertragenen Leistung entsprechen.

**15.** System nach Anspruch 10, **dadurch gekennzeichnet, dass** die mindestens eine überwachte elektrische Größe der Norm der über ein Kabel übertragenen Stromstärke entspricht.

**16.** System nach einem der Ansprüche 10 bis 15, **dadurch gekennzeichnet, dass** die Optimierungsfunktion gewählt ist unter:

- Maximieren der Summe der den Einheiten (Ei) zugeordneten Erzeugungs- und/oder Verbrauchsquoten,
- Maximieren der Gerechtigkeit der Verbrauchsbeschränkungen zwischen den Einheiten oder
- Maximieren des Logarithmus für die jeder Einheit (Ei) zugeordnete Leistung.

**17.** System nach einem der Ansprüche 10 bis 16, **dadurch gekennzeichnet, dass** das Steuerungsmodul (M2) dazu ausgestaltet ist, einen Mindestwert ($q^{min}(t)$) und einen Höchstwert ($q^{max}(t)$) für die Erzeugungs- und/oder Verbrauchsquoten, die für jede Einheit (Ei) zu beachten sind, unter Berücksichtigung von technischen Daten (D20) bezüglich jeder Einheit (Ei) zu bestimmen, die unter einem oder mehreren der folgenden Daten gewählt werden:

- einem Leistungsniveau, das jeder Einheit (Ei) gemäß ihrem Versorgungsvertrag zugeordnet wird,
- Daten bezüglich der Stromerzeugungslösung, die in jeder erzeugenden Einheit installiert ist,
- einer "kappbaren" Energie- oder Leistungshöchstmenge je Einheit,
- Daten bezüglich der Speicherkapazität der Einheit (Ei), wenn sie erzeugend ist.

**18.** System nach einem der Ansprüche 10 bis 17, **dadurch gekennzeichnet, dass** es ein Lernmodul (M1) umfasst, das dazu ausgestaltet ist, eine Anzahl neuer elektrischer Daten des Stromnetzes und eine Aktualisierung des mindestens einen Datenmodells (MD1, MD2) des Stromnetzes, wenn genügend erfasste elektrische Daten verfügbar sind, zu bestimmen.

**Claims**

**1.** Method for monitoring and controlling an electrical network that includes at least one transformer station (P) delimiting a medium-voltage sub-network and a low-voltage sub-network and a plurality of entities (Ei) connected to a determined voltage of the low-voltage sub-network, each entity being a consumer and/or a producer of electricity in the low-voltage sub-network, said method being implemented by a monitoring and control system comprising at least one processing unit, **characterized in that** said method includes:

- a step of acquiring an amount of electrical power consumed and/or produced by each entity (Ei) of the low-voltage sub-network at successive time intervals;
- a step of determining, at each new time interval, a production and/or consumption quota (q) to be attributed to each entity (Ei);
- a step of determining a minimum ($q^{min}(t)$) and a maximum ($q^{max}(t)$) production and/or consumption quota value to be observed for each entity (Ei) taking into account the amount of electrical power consumed and/or produced at a time interval ($p_{cons}(t - 1)$, $p_{prod}(t - 1)$) preceding said new time interval;
- a step of determining a projected consumed and/or produced amount of electrical power $\left(\widetilde{p_{cons}(t)}, \widetilde{p_{prod}(t)}\right)$ for each entity, based on said consumed and/or produced amount of electrical power acquired at a time interval preceding said new time interval;
- said production and/or consumption quota (q) being a solution to an optimization problem taking into account:

- at least one unique data model (MD1, MD2) acquired by learning, applied at each new time interval and including data that are representative of an effect of the amount of electrical power consumed and/or produced by each entity (Ei) on at least one monitored electrical quantity;
- technical constraints to be observed for said at least one monitored quantity;
- said determined minimum and maximum production and/or consumption quota values;
- said determined projected consumed and/or produced amount of electrical power for each entity;
- an optimization function selected to allocate the production and/or consumption quotas to the entities;

- a step of determining control data (Dx) on the production and/or on the consumption of electricity to be applied to one or more entities of the low-voltage sub-network taking into account each determined production and/or consumption quota.

2. Method according to Claim 1, **characterized in that** said at least one monitored electrical quantity corresponds to the voltage standard of each entity at its connection point.

3. Method according to Claim 2, **characterized in that** said constraints to be observed for said at least one monitored electrical quantity correspond to a minimum voltage value ($u^{min}$) and a maximum voltage value ($u^{max}$) for each entity (Ei).

4. Method according to Claim 1, **characterized in that** said at least one monitored electrical quantity corresponds to the electrical power passing through the transformer station.

5. Method according to Claim 2, **characterized in that** said constraints to be observed for said at least one monitored electrical quantity correspond to a minimum value $\left(p_{trans}^{min}\right)$ of power passing through the transformer and a maximum value $\left(p_{trans}^{max}\right)$ of power passing through the transformer station (P).

6. Method according to Claim 1, **characterized in that** said at least one monitored electrical quantity corresponds to the standard for the amperage passing through a cable.

7. Method according to one of Claims 1 to 6, **characterized in that** said optimization function is selected from:

- maximizing the sum of the production and/or consumption quotas attributed to the entities (Ei);
- maximizing the equity of the consumption restrictions between the entities; or
- maximizing the logarithm of the power attributed to each entity (Ei).

8. Method according to one of Claims 1 to 7, **characterized in that** the step of determining a minimum ($q^{min}(t)$) and a maximum ($q^{max}(t)$) production and/or consumption quota value to be observed for each entity (Ei) is carried out while taking into account technical data (D20) relating to each entity (Ei), selected from one or more of the following data:

- a level of power attributed to each entity (Ei) according to its supply contract;
- data relating to the electricity production solution installed within each producer entity;
- a maximum amount of cappable power or energy per entity;
- data relating to the storage capacity of the entity (Ei) if this entity is a producer.

9. Method according to one of Claims 1 to 8, **characterized in that** it includes a step of determining the number of new electrical data on the electrical network and a step of updating said at least one data model (MD1, MD2) of the electrical network when enough acquired electrical data are available.

10. System for monitoring and controlling an electrical network that includes at least one transformer station (P) delimiting a medium-voltage sub-network and a low-voltage sub-network and a plurality of entities (Ei) connected to a determined voltage of the low-voltage sub-network, each entity being a consumer and/or a producer of electricity in the low-voltage sub-network, **characterized in that** said system includes:

- a module for acquiring an amount of electrical power consumed and/or produced by each entity (Ei) of the low-voltage sub-network at successive time intervals;
- a control module (M2) configured:

- to determine, at each new time interval, a production and/or consumption quota (q) to be attributed to each entity (Ei);
- to determine a minimum ($q^{min}(t)$) and a maximum ($q^{max}(t)$) production and/or consumption quota value to be observed for each entity (Ei) taking into account the amount of electrical power consumed and/or produced at a time interval ($p_{cons}(t - 1)$, $p_{prod}(t - 1)$) preceding said new time interval;
- to determine a projected consumed and/or produced amount of electrical power $\left(\widetilde{p_{cons}}(t), \widetilde{p_{prod}}(t)\right)$ for each entity, based on said consumed and/or produced amount of electrical power acquired at a time interval preceding said new time interval;

- said production and/or consumption quota (q) being a solution to an optimization problem taking into account:

- at least one unique data model (MD1, MD2) acquired by learning, applied at each new time interval and including data that are representative of an effect of the amount of electrical power consumed and/or produced by each entity (Ei) on at least one monitored electrical quantity;
- technical constraints to be observed for said at least one monitored quantity;
- said determined minimum and maximum production and/or consumption quota values;
- said determined projected consumed and/or produced amount of electrical power for each entity;
- an optimization function selected to allocate the production and/or consumption quotas to the entities;

- to determine control data (Dx) on the production and/or on the consumption of electricity to be applied to one or more entities of the low-voltage sub-network taking into account each determined production and/or consumption quota.

11. System according to Claim 10, **characterized in that** said at least one monitored electrical quantity corresponds to the voltage standard of each entity at its connection point.

12. System according to Claim 11, **characterized in that** said constraints to be observed for said at least one monitored electrical quantity correspond to a minimum voltage value ($u^{min}$) and a maximum voltage value ($u^{max}$) for each entity (Ei).

13. System according to Claim 10, **characterized in that** said at least one monitored electrical quantity corresponds to the electrical power passing through the transformer station.

14. System according to Claim 13, **characterized in that** said constraints to be observed for said at least one monitored electrical quantity correspond to a minimum value $\left(p_{trans}^{min}\right)$ of power passing through the transformer and a maximum value $\left(p_{trans}^{max}\right)$ of power passing through the transformer station (P).

15. System according to Claim 10, **characterized in that** said at least one monitored electrical quantity corresponds to the standard for the amperage passing through a cable.

16. System according to one of Claims 10 to 15, **characterized in that** said optimization function is selected from:

- maximizing the sum of the production and/or consumption quotas attributed to the entities (Ei);
- maximizing the equity of the consumption restrictions between the entities; or
- maximizing the logarithm of the power attributed to each entity (Ei).

17. System according to one of Claims 10 to 16, **characterized in that** the control module (M2) is configured to determine a minimum ($q^{min}(t)$) and a maximum ($q^{max}(t)$) production and/or consumption quota value to be observed for each entity (Ei) while taking into account technical data (D20) relating to each entity (Ei), selected from one or more of the following data:

- a level of power attributed to each entity (Ei) according to its supply contract;
- data relating to the electricity production solution installed within each producer entity;
- a maximum amount of "cappable" power or energy per entity;
- data relating to the storage capacity of the entity (Ei) if this entity is a producer.

18. System according to one of Claims 10 to 17, **characterized in that** it includes a learning module (M1) configured to determine a number of new electrical data on the electrical network and an operation of updating said at least one data model (MD1, MD2) of the electrical network when enough acquired electrical data are available.

*Fig. 1*

*Fig. 2*

**Fig. 3**

**Fig. 4A**

**Fig. 4B**

**Fig. 4C**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2013204451 A1

**Littérature non-brevet citée dans la description**

- **KONSTANTINA CHRISTAKOU ; JEAN-YVES LE BOUDEC ; MARIO PAOLONE ; DAN-CRISTIAN TOMOZEI.** *Efficient Computation of Sensitivity Coefficients of Node Voltages and Line Currents in Unbatanced Radial Electrical Distribution Networks*